Europäisches Patentamt

**European Patent Office**

**Office européen des brevets**

(11) Numéro de publication: **0 324 672**
**A1**

(12) **DEMANDE DE BREVET EUROPEEN**

(21) Numéro de dépôt: **89400051.2**

(22) Date de dépôt: **09.01.89**

(51) Int. Cl.⁴: **F 16 L 41/02**

(30) Priorité: **11.01.88 FR 8800218**

(43) Date de publication de la demande:
**19.07.89 Bulletin 89/29**

(84) Etats contractants désignés:
**AT BE CH DE ES GB IT LI NL**

(71) Demandeur: **C.G.M.I. COMPOSANTS GAZ POUR LA MICRO ELECTRONIQUE INTERNATIONALE**
**8 Rue des Artisans**
**F-78760 Jouars Pontchartrain (FR)**

(72) Inventeur: **Dugast, Joseph**
**13 rue Honoré**
**F-78000 Versailles (FR)**

(74) Mandataire: **Thibon-Littaye, Annick et al**
**Cabinet A. THIBON-LITTAYE 11 rue de l'Etang**
**F-78160 Marly-le-Roi (FR)**

(54) **Raccord soudé démontable notamment pour haute étanchéité de gaz rares.**

㊷ L'invention concerne un raccord soudé démontable pour connexion à haute étanchéité notamment de gaz rares. Il comporte un bloc central de base (10) à axes de symétrie centraux perpendiculaires muni de conduits de passage (2,3) vers au moins deux sorties situées chacune sur une face dudit bloc constituant une tête de raccord (5,6,7), une desdites sorties étant au moins une sortie à souder (7), une étant au moins une sortie mâle (5) ou femelle (6), la distance entre le centre de symétrie du bloc de base et l'extrémité ouverte d'une tête de raccord mâle ou femelle ou sortie à souder étant identique dans toutes les directions de raccordement.

FIG-1

EP 0 324 672 A1

Description

## RACCORD SOUDE DEMONTABLE NOTAMMENT POUR HAUTE ETANCHEITE DE GAZ RARES

La présente invention concerne le domaine des raccords soudés démontables pour haute étanchéité notamment de gaz rares connectés à des tuyaux et munis de différentes têtes de raccord pour permettre des associations tout en maintenant une étanchéité parfaite. Parmi les différentes têtes composant ces raccords, on trouve des têtes males et des têtes femelles coopérant ensemble pour permettre l'association de plusieurs raccords entre eux et des têtes à souder sur lesquelles viennent se solidariser des tuyaux délivrant ces gaz.

Dans les dispositifs actuellement disponibles les différentes sorties réalisées sur un raccord sont adaptées de manière à permettre l'association ainsi que la possibilité de soudage mais ces dispositifs possèdent tous l'inconvénient majeur d'un encombrement important et d'un nombre de soudures entre les éléments souvent excessif.

La présente invention vise donc à réaliser un nouveau dispositif de raccord d'un encombrement réduit par rapport aux dispositifs actuellement disponibles qui assure une miniaturisation des ensembles de panneaux de gaz, une diminution du nombre des soudures et du volume intérieur de gaz ainsi qu'une standardisation des côtes d'encombrement des éléments de ces raccords.

L'idée mère de la présente invention est d'utiliser un bloc central cubique muni en son intérieur de conduits qui débouchent sur chacune de ses faces vers une ouverture auquelle on associe une tête adaptée à l'usage que l'on désire. Le dimensionnement du bloc de base conjointement avec les différentes têtes est étudié pour créer un ensemble d'encombrement réduit.

La présente invention a donc pour objet un raccord soudé démontable pour connexion à haute étanchéité notamment de gaz rares, caractérisé en ce qu'il comporte un bloc central de base à axes de symétrie centraux perpendiculaires muni de conduits de passage vers au moins deux sorties situées chacune sur une face dudit bloc constituant une tête de raccord, une desdites sorties étant au moins une sortie à souder, une étant au moins une sortie male ou femelle, la distance entre le centre de symétrie du bloc de base et l'extrémité ouverte d'une tête de raccord male ou femelle ou sortie à souder étant identique dans toutes les directions de raccordement.

Selon une caractéristique secondaire de l'invention, le bloc central de base est de forme cubique.

Selon une autre caractéristique secondaire de l'invention les sorties males sont intégrées dans la masse au bloc central dans une direction d'un axe de symétrie.

Avantageusement, les sorties femelles comportent un prolongement tubulaire de raccordement intégré à la masse du bloc central sur lequel est raccordé par soudage une pièce femelle muni d'un embout à haute étanchéité coopérant avec un écrou femelle.

Selon une autre caractéristique, une première extrémité de la pièce femelle comporte une forme tubulaire propre à être soudée au prolongement de raccordement du bloc central et une deuxième extrémité munie de l'embout à haute étanchéité autour duquel l'écrou femelle coulisse.

Avantageusement le bloc central de forme cubique comporte sur chacune de ces faces un décrochement constituant une surface d'appui pour une pince à souder munie d'une électrode, de manière à assurer le raccordement d'une pièce femelle sur son prolongement tubulaire associé dans le bloc central.

On décrira maintenant plus en détail une forme de réalisation particulière de l'invention qui en fera mieux comprendre les caractéristique essentielles et les avantages. Etant entendu toutefois que cette forme de réalisation est choisie à titre d'exemple et qu'elle n'est nullement limitative. Sa description est illustrée par les dessins annexés dans lesquels :

- la figure 1 représente un raccord muni de trois sorties, respectivement, une tête femelle, une tête male et une tête à souder ;

- la figure 2 représente un raccord à quatre sorties, deux males et deux adaptés à recevoir par soudage une pièce femelle ;

- la figure 3 représente un raccord à quatre sorties, deux males et deux femelles ;

- la figure 4 représente un raccord à quatre sorties avec positionnement de la tête à souder entre le bloc de base et l'embout femelle.

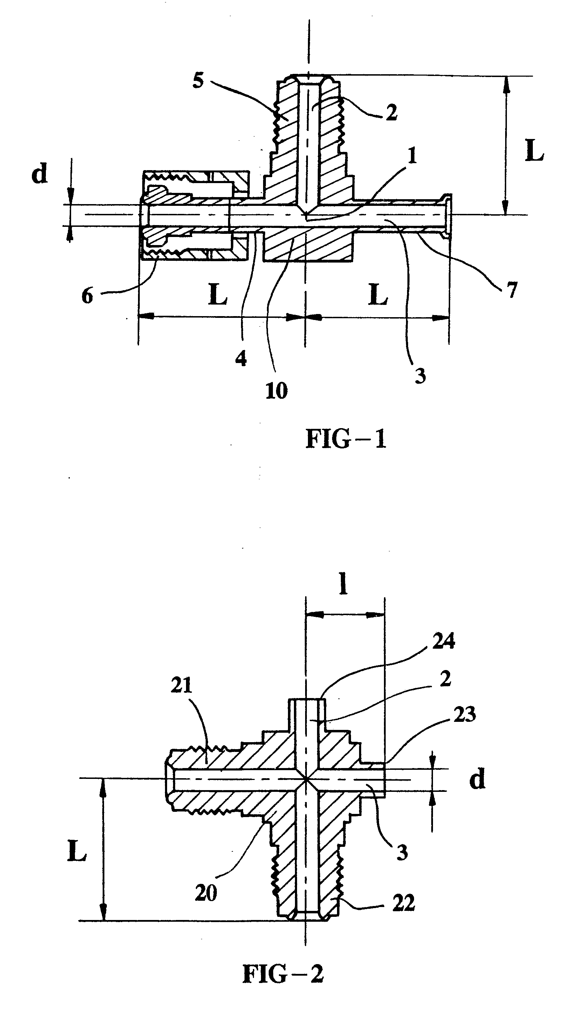

La figure 1 représente un raccord soudé démontable comportant trois sorties. Ce raccord se compose d'un bloc de base 10 de forme cubique comportant en son intérieur deux conduits 2,3 de diamètre $\underline{d}$. Ces conduits sont disposés le long des axes de symétrie perpendiculaires du cube se croisant au centre 1 du bloc. Dans le cas de la figure 1, trois conduits sont disposés dans le bloc de base et débouchent au centre dudit cube. A partir de ce bloc de base 10, on réalise, selon l'utilisation désirée, différentes sorties qui pourront être associées entre elles pour réaliser des ensembles ou pour délivrer des sorties à souder sur lesquelles seront connectés des tuyaux.

La figure 1 montre une sortie male 5, une sortie femelle 6, une tête à souder 7. La tête de sortie male 5, plutôt que d'être aboutée au bloc, est noyée dans la masse de celui-ci, l'axe du conduit de la tête male coïncidant avec un axe de symétrie du bloc de base cubique.

Les dimensions des différentes têtes utilisées dans ces raccords, sont étudiées de manière à ce que la distance du centre de symétrie du bloc de base (représenté par la référence 1) à l'extrémité d'ouverture d'une tête quelconque d'est-à-dire male, femelle ou sortie à souder, soit identique dans toutes les directions.

Sur la figure 1 où sont représentés une tête male, une tête femelle et une tête à souder, la distance du centre 1 du bloc de base 10 jusqu'à l'extrémité des têtes correspond à une même distance L de manière à constituer, lors du montage, un encombrement minimum.

La figure 2 représente un raccord dans lequel, sur deux faces concomitantes sont disposés deux têtes males 21,22 obtenues dans la masse, à partir d'un bloc de base 20. Ce bloc de base est muni également sur deux autres faces d'embouts courts 23,24 constituant des prolongements de raccordement d'une longueur 1 par rapport au centre du bloc de base. Ces embouts courts 23,24 viendront recevoir une pièce femelle qui sera fixée par soudage pour constituer ensemble la tête femelle. Ces embouts courts peuvent également servir directement de sorties à souder sur lesquels on vient fixer les tuyaux qui délivrent les gaz.

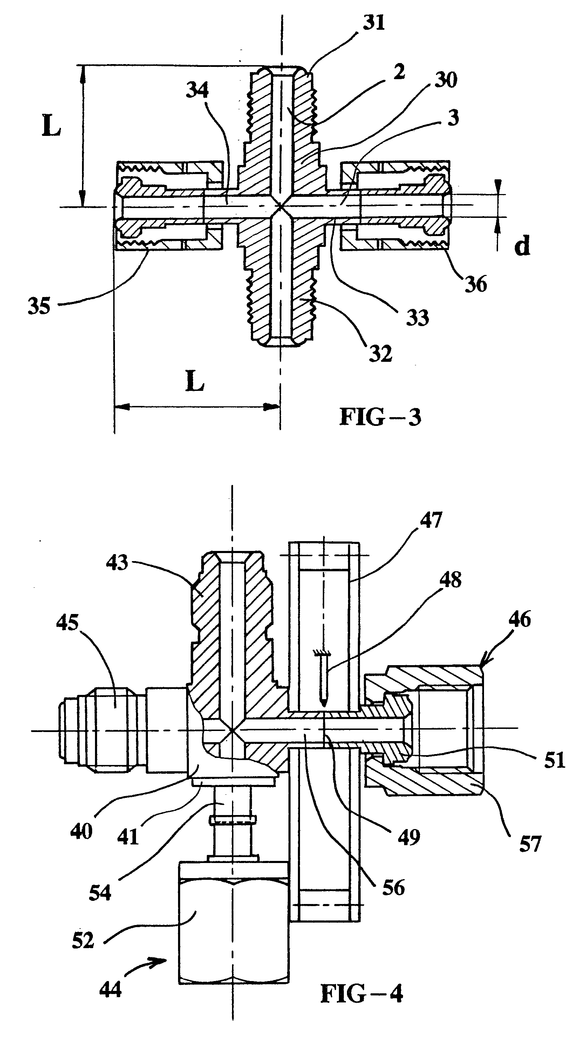

La figure 3 représente un raccord comportant quatre sorties, deux têtes males situées diamétralement opposées par rapport au centre du bloc de base et deux têtes femelles fixées à partir des prolongements de raccordement 33,34 et munies de pièces femelles 35,36. Les pièces femelles 35,36 sont dimensionnées par rapport aux prolongements de raccordement 33,34 de manière à ce que d'une part, la distance du centre de symétrie du bloc de base jusqu'à l'ouverture de la pièce femelle soit égale à la distance L normalisée pour toutes les têtes de raccord, et d'autre part, le prolongement de raccordement soit également dimensionné de manière à permettre le déplacement de l'écrou femelle autour de l'embout, d'une position arrière, où cette pièce femelle est prête à recevoir la pièce male, à une position avant où l'écrou femelle enserre et bloque, l'une par rapport à l'autre, la pièce male et la pièce femelle.

La figure 4 représente un raccord soudé démontable comportant quatre têtes de raccord, deux têtes males 43,45 et deux têtes femelles 44,46. Les deux têtes males sont intégrées dans la masse à partir du bloc de base 40. Ce bloc de base 40 comporte sur chacune de ses faces un décrochement 41 constituant une surface d'appui. Les têtes de raccord femelles sont constituées par deux prolongements de raccord 54,56 sur lesquels sont soudés, respectivement, la pièce femelle 44,46 du raccord. Pour permettre cette soudure de la pièce femelle sur l'embout de raccordement, il est utilisé une pince à souder 47 qui vient en appui contre, d'une part le bloc central au niveau du décrochement 41 et de l'autre côté contre la pièce femelle. A l'intérieur de cette pince est située une électrode 48 de type à soudure TIG, assurant la soudure au niveau de l'accolement 49 des deux conduits. Le dimensionnement de l'embout de raccordement 56 est tel qu'il constitue pratiquement la moitié de la largeur de la pince de raccordement, l'électrode étant située en son milieu.

La pièce femelle comporte sur une extrémité un conduit tubulaire d'une longueur sensiblement égale à l'embout de raccordement 56. Sur l'autre extrémité, elle est munie d'un embout à haute étanchéité (51) contre lequel on vient accoler l'extrémité de la pièce male qui doit être agencée à la pièce femelle. Autour de cet embout à haute étanchéité coulisse un écrou femelle de blocage muni d'un filetage intérieur coopérant avec les pièces males pour solidariser l'ensemble.

La forme de l'embout à haute étanchéité assure un encombrement minimum lorsque l'écrou est rentré, tout en permettant un démontage d'une pièce accolée audit embout sans écartement latéral des pièces les unes par rapport aux autres.

Pour permettre la soudure de pièce femelle sur le prolongement, il est nécessaire de venir faire pivoter l'écrou femelle (57) vers l'avant. Dans cette position de fin de course la pince à souder vient contre le bloc et l'extrémité arrière de l'embout à haute étanchéité. Il est également évident que le dimensionnement de ce prolongement de raccordement 56 et de la partie du conduit arrière de la pièce femelle doit être suffisamment long pour permettre un mouvement de translation arrière de l'écrou femelle tout en maintenant un dimensionnement de têtes d'une longueur L, tel qu'il a été évoqué antérieurement, c'est-à-dire que lorsque l'écrou femelle est amené vers l'arrière par une action de coulissement, la distance de l'extrémité ouverte de cet embout à haute étanchéité est la même que la distance du centre du bloc à une extrémité d'une tête male ou d'une tête à souder.

La présente invention permet donc d'obtenir des raccords soudés démontables qui, de par leur forme particulière ainsi que les dimensionnements des différentes têtes qui y sont adaptables, assurent un encombrement minimum et une normalisation facilitant une utilisation dans le cadre des agencement de tuyaux à haute étanchéité de gaz rares.

Naturellement, l'invention n'est en rien limitée par les particularités qui ont été spécifiées dans ce qui précède ou par les détails du mode de réalisation particulier choisi pour illustrer l'invention. Toutes sortes de variantes peuvent être apportées à la réalisation particulière qui a été décrite à titre d'exemple et à ses éléments constitutifs sans sortir pour autant du cadre de l'invention. Cette dernière englobe ainsi tous les moyens constituant des équivalents techniques des moyens décrits ainsi que leurs combinaisons.

**Revendications**

1. Raccord soudé démontable pour connexion à haute étanchéité notamment de gaz rares, caractérisé en ce qu'il comporte un bloc central de base (10,20,30,40) à axes de symétrie centraux perpendiculaires muni de conduits de passage (2,3) vers au moins deux sorties situées chacune sur une face dudit bloc constituant une tête de raccord (5,6,7 ; 21,22 ; 31,32,35,36 ; 43,44,45,46), une desdites sorties étant au moins une sortie à souder (7), une étant au moins une sortie male (5,21,22,31,32,43,45) ou femelle (6,35,36,45,46), la distance entre le centre de symétrie du bloc de base et l'extrémité ouverte d'une tête de raccord male ou femelle ou sortie à souder étant identique dans toutes les directions de raccordement.

2. Raccord selon la revendication 1, caractérisé en ce que le bloc central de base (10,20,30,40) est de forme cubique.

3. Raccord selon les revendication 1 ou 2, caractérisé en ce que les sorties males (5,31,32,43,45,21,22) sont intégrées dans la masse au bloc central dans une direction d'un axe de symétrie.

4. Raccord selon l'une quelconque des revendications 1 à 3, caractérisé en ce que les sorties femelles (46) comportent un prolongement (56) tubulaire de raccordement intégré à la masse du bloc central sur lequel est raccordé par soudage une pièce femelle (46) munie d'un embout à haute étanchéité (51) coopérant avec un écrou femelle (57).

5. Raccord selon la revendication 4, caractérisé en ce qu'une première extrémité de la pièce femelle (51) comporte une forme tubulaire propre à être soudée au prolongement (56) de raccordement du bloc central et une deuxième extrémité munie de l'embout à haute étanchéité (51) autour duquel d'écrou femelle (57) coulisse.

6. Raccord selon l'une quelconque des revendications 1 à 5, caractérisé en ce que le bloc central de forme cubique comporte sur chacune de ses faces un décrochement (41) constituant une surface d'appui pour une pince à souder munie d'une électrode (48) de manière à assurer le raccordement d'une pièce femelle sur son prolongement tubulaire associé dans le bloc central.

7. Raccord selon l'une quelconque des revendications 4 à 6, caractérisé en ce que le prolongement tubulaire intégré au bloc central est dimensionné par rapport à la pièce femelle en vue d'un positionnement de la pince à souder entre le bloc et la tête de filetage et pour la translation de la bague dans une position non active vers une position de blocage de la tête male contre la tête femelle.

8. Raccord selon l'une quelconque des revendications 4 à 7, caractérisé en ce que les prolongements tubulaires de raccordement (41,49,23,24) intégrés à la masse du bloc central sont associés directement par soudage à des tuyaux délivrant lesdits gaz.

FIG—1

FIG—2

**FIG—3**

**FIG—4**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | DE-B-R399 XII/47F (RIEGER) <br> * Revendication 1, figure 1 * <br> --- | 1 | F 16 L  41/02 |
| A | DE-A-2 740 742  (FUERTINGER) <br> * Revendication 3, figures 1,2 * <br> --- | 1,2 | |
| A | DE-A-3 209 950  (HORN) <br> * Figures 2,4 A * <br> --- | 1,2 | |
| A | GB-A-1 451 869  (BERG) <br> * Figures 1-5 * <br> --- | 1 | |
| A | DE-U-8 133 339  (BURGER-ARMATUREN) <br> * Revendication 1, figure 1 * <br> ----- | 1 | |

DOMAINES TECHNIQUES
RECHERCHES (Int. Cl.4)

F 16 L  41/00

Le présent rapport a été établi pour toutes les revendications

| Lieu de la recherche | Date d'achèvement de la recherche | Examinateur |
|---|---|---|
| BERLIN | 15-03-1989 | SCHLABBACH M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)